Europäisches Patentamt

European Patent Office

Office européen des brevets

(11) Veröffentlichungsnummer: **0 301 180 B1**

(12) **EUROPÄISCHE PATENTSCHRIFT**

(45) Veröffentlichungstag der Patentschrift: **09.09.92**

(21) Anmeldenummer: **88106856.3**

(22) Anmeldetag: **28.04.88**

(51) Int. Cl.⁵: **B01D 29/01**, B01D 61/14

(54) **Druckfiltrationsgerät.**

(30) Priorität: **30.07.87 DE 8710459 U**

(43) Veröffentlichungstag der Anmeldung:
**01.02.89 Patentblatt 89/05**

(45) Bekanntmachung des Hinweises auf die
Patenterteilung:
**09.09.92 Patentblatt 92/37**

(84) Benannte Vertragsstaaten:
**CH DE FR GB LI NL**

(56) Entgegenhaltungen:
**CH-A- 409 550**

(73) Patentinhaber: **Schleicher & Schuell GmbH**
**Grimsehlstrasse 23**
**W-3352 Einbeck(DE)**

(72) Erfinder: **Bugar, Robert**
**Bartshausen 57**
**W-3352 Einbeck(DE)**

(74) Vertreter: **Jaeger, Klaus, Dipl.-Chem. Dr. et al**
**Jaeger, Steffens & Köster Patentanwälte**
**Pippinplatz 4a**
**W-8035 München-Gauting(DE)**

## Beschreibung

Die Erfindung betrifft ein Druckfiltrationsgerät aus einem zweiteiligen Druckgehäuse aus Edelstahl oder Kunststoff, dessen mit einem Zulaufstutzen ausgestatteter anströmseitiger Gehäuseteil unter Einspannung einer Membran druckfest und fluiddicht mit dessen, mit einem Filtratablaufstutzen versehenen, filtratseitigen Gehäuseteil verbindbar ist.

Ein derartiges Druckfiltrationsgerät kann für die Mikro- und Ultrafiltration, z.B. Klarfiltration, Ultrareinigung oder Sterilfiltration von Flüssigkeiten oder Entfernung von Mikroorganismen und/oder Partikeln aus der Luft oder anderen Gasen, was z.B. im Lebensmittelbereich, in pharmazeutischen und klinischen Bereichen im Hinblick auf die mikrobiologische Beschaffenheit von Flüssigkeiten und der Luft eingesetzt werden.

Zwischen den beiden Druckgehäuseteilen können ebenfalls druckfest und fluiddicht Filterelemente, z.B. ein Membranfilter oder Klär- bzw. Entkeimungsschichten zusammen mit einer O-Ring-Dichtung eingespannt werden. Ein Verschluß, der die beiden Druckgehäuseteile miteinander verbindet, muß sowohl gegen die Dichtungskräfte als auch gegen den durch das zu filtrierende Medium beaufschlagten Druck sicher wirken.

Druckfiltrationsgeräte der eingangs genannten Art sind bereits von verschiedenen Herstellern bekannt. Die druckfeste und fluiddichte Verbindung der Gehäuseteile und Filterelemente wird dabei üblicherweise durch mehrere vertikal zur Filterfläche angeordnete Klammern hergestellt, die entweder durch Schrauben oder Spannhebel befestigt werden.

Dies hat die Nachteile, daß einerseits der Platzbedarf dieser flügelschrauben- bzw. spannhebelbewehrten Klammern recht groß ist, und daß andererseits, falls es unter Umständen darauf ankommt, einen Filterwechsel schnell, zeitsparend, einfach und mit wenigen Handgriffen zu vollziehen, dies durch die Vielzahl bzw. das langwierige Öffnen der zu lösenden Klammern erschwert wird.

Aus der CH-A-490 550 ist ferner eine Schlauch- oder Rohrkupplung bekannt, die insbesondere zum Anschließen von Filtern in Schutzraumbelüftungsanlagen Verwendung findet. Diese Kupplung besteht aus einer Bride mit zwei schwenkbaren Sektoren, die zu ihrer gegenseitigen Verbindung an ihren freien Enden mit einem Spannhebelverschluß versehen sind. Diese schwenkbaren Sektoren sind dabei an einen, mit einer Kupplungshälfte fest verbundenen Sektor von kleinerem Zentrierwinkel anscharniert. Zur Montage dieser Schlauch- oder Rohrkupplung werden zuerst der feste Bridensektor in den unteren Rand des Flansches angelegt und anschließend die beiden schwenkbaren Bridensektoren um die Flanschen herumgelegt.

Ausgehend von diesem Stand der Technik liegt der vorliegenden Erfindung die Aufgabe zugrunde, ein Druckfiltrationsgerät für Flüssigkeiten und Gase zu schaffen, das über einen sicheren Druckverschluß mit einem geringen Platzbedarf verfügt, der einfach und schnell handhabbar ist und einen zeitsparenden Filterwechsel zuläßt.

Gelöst wird diese Aufgabe durch ein Druckfiltrationsgerät der genannten Art, das gekennzeichnet ist durch einen Klemmbügel mit einem Spannhebelverschluß und mit einem außen durchgehend umlaufenden Flachbandring, der innen mit zwei formstabilen, im Querschnitt trapezförmigen Halbringen derart ausgestattet ist, daß der außen umlaufende Flachbandring auf der den Spannhebelverschluß diametral gegenüberliegenden Seite als Filmscharnier wirkt, wobei die beiden miteinander verbindbaren Gehäuseteile abgeschrägte Außenränder aufweisen, die durch die trapezförmigen Halbringe in Schließstellung des Klemmbügels übergriffen sowie ringförmig umspannt und axial aufeinander gezwungen werden.

Die Erfindung wird nachstehend anhand der Figuren näher erläutert. Es zeigen:

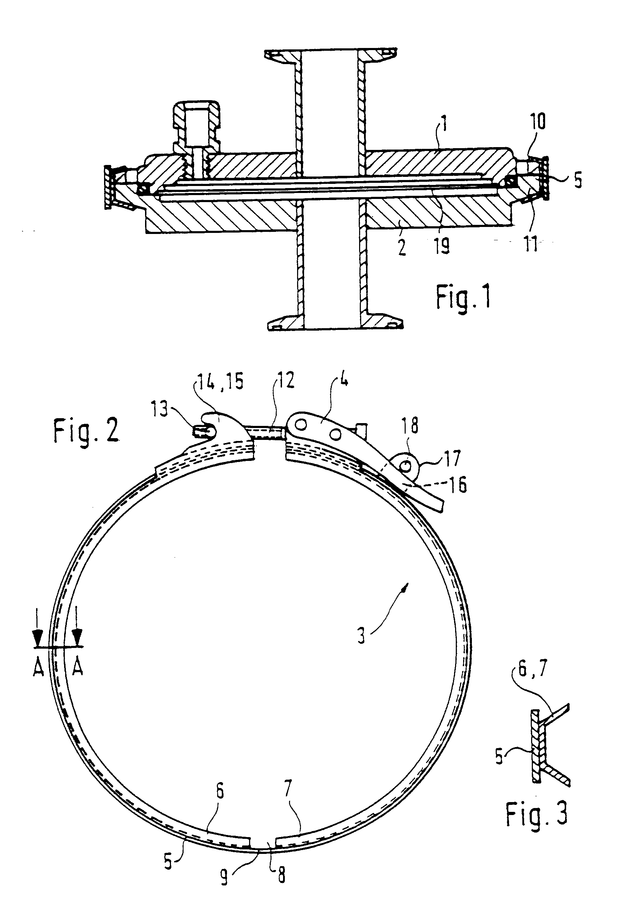

Fig. 1    einen schematischen Schnitt durch das Druckfiltrationsgerät;

Fig. 2    den Klemmbügelverschluß in Aufsicht;

Fig. 3    den Klemmbügel im Querschnitt entlang der Linie A -A in Fig. 2.

Der Verschluß des erfindungsgemäßen Druckfiltrationsgeräts, der die beiden Gehäuseteile 1,2 druckfest und fluiddicht miteinander verbindet, besteht aus einem Klemmbügel 3, der mittels eines Spannhebels 4 in Schließstellung gebracht wird. Der Klemmbügel 3 wird durch einen einseitig offenen, außen durchgehend umlaufenden, zylindrischen Flachbandring 5 aus Edelstahl gebildet, an dessen Innenseite zwei formsteife im Querschnitt trapezförmige Halbringe 6,7 mit ihrem Plateau derart befestigt sind, daß sie jeweils mit einem Ende an den Enden des Stahlbandes 5 abschließen und zwischen ihren anderen Enden eine Lücke 8 bestehen bleibt. Dadurch kann das diese Lücke überbrückende Stahlband 5 an dieser Stelle als Filmscharnier 9 wirken, so daß der Klemmbügel die für die Montage notwendige Flexibilität erhält.

Der Klemmbügel umspannt nach der Montage die Außenränder 10,11 der beiden aufeinandergelegten Druckgehäuseteile 1,2 ringförmig, wobei die Trapezschenkel der formsteifen Halbringe 6,7 die abgeschrägten Bereiche der Gehäuseteile 10,11 übergreifen und in Schließstellung axial aufeinanderzwingen.

Der Schließmechanismus des Klemmbügels 3 besteht aus einem die Lücke zwischen den Enden des Flachbandes 5 überbrückenden Tangential-Spannschraubenbolzen 12, dessen Schraubenmutter 13 bei der Montage des Klemmbügels 3 zum Ringschluß in die Höhlen der zwei am Flachbandring angeformten Nasen 14,15 eingelegt wird, an dem ein Spannhebel 4 derart befestigt ist, daß durch Umklappen dieses Spannhebels 4 in Schließstellung die Flachbandenden zusammengezogen werden. Das Ausmaß dieser Radiusverkleinerung des Klemmringes kann durch Verdrehen des Spannschraubenbolzens 12 verändert werden, so daß einerseits der Kraftaufwand zum Umklappen des Spannhebels 4 und andererseits die Spannkraft des Klemmbügelverschlusses variabel sind.

Der Spannhebelgriff ist mit einer schlitzförmigen Aussparung 16 versehen, durch die in Schließstellung eine am Klemmring angeformte Lasche 17 hindurchgreift. Ein Loch 18 dieser Lasche dient der Aufnahme eines Sperrelements, z.B. eines Stiftes oder Schloßbügels, so daß der Spannhebel in dieser Stellung gesichert werden kann.

Alternativ kann der Klemmring anstelle des Spannhebels auch mit auf den Spannbolzen aufgesetzten Flügelmuttern gespannt werden.

## Patentansprüche

1. Druckfiltrationsgerät aus einem zweiteiligen Druckgehäuse aus Edelstahl oder Kunststoff, dessen mit einem Zulaufstutzen ausgestatteter anströmseitiger Gehäuseteil (1), unter Einspannung einer Membran (19), druckfest und fluiddicht mit dessen, mit einem Filtratablaufstutzen versehenen, filtratseitigen Gehäuseteil (2) verbindbar ist
**gekennzeichnet** durch
einen Klemmbügel (3) mit einem Spannhebelverschluß und mit einem außen durchgehend umlaufenden Flachbandring (5), der innen mit zwei formstabilen, im Querschnitt trapezförmigen Halbringen (6,7) derart ausgestattet ist, daß der außen umlaufende Flachbandring (5) auf der den Spannhebelverschluß diametral gegenüberliegenden Seite als Filmscharnier (9) wirkt, wobei die beiden miteinander verbindbaren Gehäuseteile (1,2) abgeschrägte Außenränder (10,11) aufweisen, die durch die trapezförmigen Halbringe (6,7) in Schließstellung des Klemmbügels (3) übergriffen sowie ringförmig umspannt und axial aufeinander gezwungen werden.

2. Druckfiltrationsgerät nach Anspruch 1,
**gekennzeichnet** durch
einen Tangential-Spannschraubenbolzen (12) am Spannhebel (4).

3. Druckfiltrationsgerät nach Anspruch 1 oder 2,
**gekennzeichnet** durch

eine schlitzförmige Aussparung (16) im Spannhebel (4), durch die im geschlossenen Zustand des Spannhebelverschlusses eine am Flachbandring (5) angeformte, ein Loch (18) zur Aufnahme eines Sperrelementes aufweisende Lasche (17) zur Sicherung des Spannhebels (4) hindurchgreifen kann.

4. Druckfiltrationsgerät nach einem der vorhergehenden Ansprüche 1 bis 3,
dadurch **gekennzeichnet,**
daß der Klemmbügel (3) aus Edelstahl gefertigt ist.

## Claims

1. Pressure filtration appliance composed of a bipartite pressure housing of high-grade steel or plastic, whose housing part (1) on the inflow side, which is equipped with an inflow socket, can be connected in a pressure-proof and fluid-tight manner to its filtrate-sided housing part (2) which is provided with a filtrate outflow socket, by clamping a diaphragm (19), characterized by a clamping strap (3) with a cocking lever fastening and with a flat-belt ring (5) running round continuously on the outside, which is equipped on the inside with two form-stable half-rings (6 and 7) trapezoidal in cross-section, in such a way that the flat-belt ring (5) running round on the outside acts as a film hinge (9) on the side which is diametrically opposite to the cocking lever fastening, wherein the two housing parts (1 and 2) which can be connected together have chamfered outer edges (10 and 11), which are overlapped and also spanned in annular manner and forced axially onto each other in the closing position of the clamping strap (3), by the trapezoidal half-rings (6 and 7).

2. Pressure filtration appliance as claimed in Claim 1, characterized by a tangential locking screw bolt (12) on the cocking lever (4).

3. Pressure filtration appliance as claimed in Claim 1 or Claim 2, characterized by a slot-like cavity (16) in the cocking lever (4) through which a clip (17) for securing the cocking lever (4), which clip is formed on the flat-belt ring (5) and has a hole (18) for accepting a locking element, can pass in the closed position of the cocking lever fastening.

4. Pressure filtration appliance as claimed in one of the preceding Claims 1 to 3, characterized in that the clamping strap (3) is manufactured from high-grade steel.

## Revendications

1. Appareil de filtration sous pression constitué par un carter sous pression en deux parties réalisées en acier inoxydable ou en matière plastique dont le demi-carter (1) situé du côté amont, pourvu d'une tubulure d'entrée, peut être relié au demi-carter (2) situé du côté du filtre, pourvu d'une tubulure d'écoulement du filtre avec relation étanche aux fluides et résistant à la pression engendrée par une membrane (19), caractérisé en ce qu'il comprend un collier de serrage (3) comportant un dispositif de verrouillage à levier tendeur et un feuillard 5 d'acier de cerclage continu par l'extérieur dont l'intérieur comprend deux demi-anneaux (6 et 7) rigides ayant une section transversale de forme trapézoïdale de telle façon que l'anneau (5) sert de film charnière (9) du côté diamétralement opposé au verrou à levier tendeur, les deux demi-carters (1 et 2) verrouillables entre eux présentant des rebords extérieurs en pente (10 et 11) qui en position verrouillée de l'étrier (3) sont enserrés par les deux anneaux (6 et 7) en forme de trapèze pour être circulairement et axialement serrés l'un contre l'autre.

2. Appareil de filtration sous pression suivant la revendication 1, caractérisé en ce qu'il comprend un goujon fileté tangentiel (12) disposé sur le levier tendeur (4).

3. Appareil de filtration sous pression suivant l'une ou l'autre des revendications 1 ou 2, caractérisé en ce que le levier tendeur (4) comprend par une ouverture (16) en forme de fente à travers laquelle peut émerger, en position verrouillée du dispositif de verrouillage à levier tendeur, une languette (17) solidaire de l'anneau en feuillard (5) et présentant un trou (18) destiné à recevoir l'élément d'arrêt de sécurité pour le levier tendeur (4).

4. Appareil de filtration sous pression suivant l'une quelconque des revendications 1 à 3, caractérisé en ce que le collier de serrage (3) est réalisé en acier inoxydable.

Fig.1

Fig. 2

Fig.3